# EUROPEAN PATENT APPLICATION

(11) **EP 1 995 223 A1**
(43) Date of publication of application: **26.11.2008**
(21) Application number: 07252289.9
(22) Date of filing: 07.06.2007
(51) Int. Cl.: C04B 7/26, C04B 12/02, F01K 13/00, F01K 15/00, C04B 7/24

(54) **Conversion of coal-fired power plants to co-generate cement**

(30) Priority: 25.04.2007 US 914026 P; 05.06.2007 US 758645
(71) Applicant: Calstar Cement, Inc., Newark CA 94560-4925 (US)
(72) Inventor: Porat, Marc, CA 94301 (US); Gill, Iqbal, CA 95050 (US); Billington, Sarah, CA 94306 (US)
(74) Representative: Russell, Tim

(57) **Abstract**

The invention provides systems, processes and methods for converting heterogeneous coal-fired power plants to cogenerate a sustainable, consistent, and economic cement. Such cogeneration enables a simultaneous production of both electric power and cement and thus provides significant economic and environmental efficiencies and benefits and eliminates a major source of greenhouse gas emissions and thereby mitigates a major contributor to climate change.

## Description

### RELATED APPLICATIONS

This application incorporates by reference in its entirety U.S. Provisional Application Serial No. 60/914,026, filed on April 25, 2007.

### BACKGROUND OF THE INVENTION

Coal combustion for the production of electricity is a major contributor to global warming, producing several billion tons of CO₂ and other greenhouses gases per year, with total GHG emissions expected to rise dramatically despite the deployment of advanced coal combustion and carbon capture technologies. In 2003, coal accounted for 24 percent of total world energy consumption. World coal consumption and the resulting GHG will nearly double in the next 20 years, from 5.4 billion short tons in 2003 to 10.6 billion tons in 2030. Coal combustion for the production of cement is also a major contributor to global warming, producing over 2 billion tons of CO₂ and other greenhouses gases in 2007, with total emissions expected to rise substantially in spite of industry-directed sustainability measures. For example, emissions from cement production have increased by over 85% over the last 15 years.

CFPPs and the ordinary Portland cement ("OPC") industries operate in parallel and independently. The CFPP industry bums coal to create high-pressure steam that drives electric turbines, while the OPC industry bums coal to convert limestone, clay and coke into cement clinker. This invention describes a process and method for combining the two processes into one by adapting CFPPs to cogenerate both electricity and cement, thus eliminating the need for burning coal to make OPC. This invention can significantly reduce coal combustion and the resulting greenhouse gases on a global scale.

According to the U.S. government, total worldwide recoverable reserves of coal are estimated at 1,001 billion tons-enough to last approximately 180 years. By other estimates, there is only approximately 250-300 years of economically minable coal left in the earth. As with non-renewable petroleum reserves, coal reserves are not renewable and economically viable deposits will be eventually depleted.

Global demand for cement exceeds 2.1 billion of metric tons per year and is growing at approximately 5% per year. To satisfy this demand, several billion tons of coal are burned annually by the OPC industry. Kilns typically use pulverized coal or coke as fuel and consume around 450g of coal for about 900g of cement produced. Hence, over 1 billion metric tons of coal are consumed by cement-making kilns. In the United States, there are more than 400 coal-burning power plants. Importantly, the world faces the prospect of having over 7000 coal-fired power plants in 79 countries pumping out 9 billion tons of CO2 emissions annually - out of 31 billion tons from all sources by 2012. Cement is conventionally made by calcining a mixture of limestone and clay with coal or coke as fuel at a temperature of approximately 1450 °C. The process releases about one ton of carbon dioxide per ton of cement - half a ton from the calcinations of the limestone itself, and another half a ton from the coal or coke needed for calcination and sintering. Worldwide cement production accounts for more than 2.5 billion tons. Hence, it accounts for over 2.5 billion tons of CO₂, which is over 7% of total CO₂ emissions from all human activities. Cement manufacturing also has negative impacts with regard to energy used for transportation, and the deleterious effects of emissions on land, water and air quality.

Global demand for electric power (energy) exceeds approximately 17 billion kilowatt hours per year and is growing at approximately 3% per year. Electricity is conventionally produced at CFPPs by burning coal, producing high pressure steam to drive turbines. Other methods of electricity generation include dams, natural gas, wind and solar. Approximately 25% of world electricity is generated by CFPPs. To satisfy this demand, approximately 6-7 billion tons of coal are burned annually by the CFPP industry. Furthermore, global output of GHG from CFPPs is estimated at approximately 30% of total global GHG in the next few years.

CFPPs produce a variety of Coal Combustion Products ("CCPs"). By some estimates, there are 480MT of CCPs available annually, 100MT in China, 83MT in the USA and 80MT in India, These CCPs are often considered to be industrial wastes which can be used by other industries, and flyash in particular is know to be cementitious. The CCPs are not necessarily used efficiently today. In the United States in 2005, total flyash production - a component of CCPs - was 71MT (million tons), but only 29MT of flyash (41%) was used for some economically useful purpose; the rest went to landfill. Of those 29MT of flyash, only 15MT (21%) were used for concrete and concrete products. The other components of CCP - bottom ash and boiler slag for example - are not extensively used by the Portland cement industry. By taking advantage of in-situ cogeneration of electricity and cement, this invention seeks to make maximum economic use of under-utilized CCPs.

CFPPs efficiently consume most of the BTUs generated by burning coal to generate boiling water, steam, compressed air and hot air. Much of these resources are recaptured and recycled. However, as much as 80% of the energy is wasted. In other words, only about 20% of the BTU's per pound contained in the coal are actually converted to electrical power. By taking advantage of in-situ cogeneration of electricity and cement, this invention seeks to make maximum economic use of the under-utilized BTUs embodied in hot water, low-pressure steam and compressed/hot air.

Additionally, CFPPs consume large amounts of real estate for the power plant itself, for rail access and materials storage. By taking advantage of in-situ cogeneration of electricity and cement, this invention seeks to make maximum economic use of the under-utilized real estate.

Additionally, CFPPs consume large amounts of rail and water transportation resources. For example, a typical CFPP will consume coal from 3-5 "rail units" per day. Each rail unit is comprised of 100 coal cars, each carrying 100 tons, or 10,000 tons per unit. The rail unit then travels back empty. In addition, worldwide Portland cement plants consume approximately 1 billion tons of coal annually. Additionally, Portland cement plants need limestone. In those cases where the limestone mine is co-located with the cement plant, the transportation load is low. However, in many cases, limestone has to be brought in by rail. By taking advantage of in-situ cogeneration of electricity and cement, this invention eliminates the need for coal and limestone transportation and thus seeks to make maximum economic use of the under-utilized transportation resources.

There exists a worldwide need for systems and processes for more efficient use of energy, as well as efficient utilization of by products resulting from thermal energy production.

### SUMMARY OF THE INVENTION

Accordingly, the invention provides systems, processes and methods of poly-generation electricity and cement.

A central aspect of the invention provides a disruptive innovation that produces cement by promoting efficient use of the energy and resources already consumed in the electric power industry. One aspect of the invention is to mitigate global greenhouse gas (GHG) emissions (e.g. CO₂ emissions, NOx, SOx, particulates) and the resulting climate change with a sustainable cement-making technology. Another aspect of the invention is directed to simultaneously improve the economic performance (e.g. return on assets, return on invested capital, gross margin, net profits) of both the power and cement industries.

Therefore, the world's fleet of existing and new coal-fired power-plants can be efficiently converted poly-generation of both electricity and cement. As such, aspects of the invention are directed to reducing or eliminating the need to bum coal for cement production, thus reducing GHG emissions from cement. Thereby cement becomes an efficiently poly-generated byproduct of producing electricity. Furthermore, polygeneration reduces or substantially eliminates the transportation used to support the worldwide cement industry (e.g., reducing the amount of raw materials transported to cement factories).

One preferred embodiment of the invention provides systems, methods and processes to convert (adapt) any and all existing coal-fired power plants to polygenerate cements. It is estimated that there are thousands of existing CFPPs worldwide that could thus be converted to generate both electricity and cement. This existing fleet generates several billion tons of flyash and other CCPs annually as deployed.

Global demand for electricity is growing by nearly 3% per year. In response, the CFPP industry has announced plans for rapidly expanding its capacity worldwide. Another preferred embodiment of the invention provides systems, methods and processes to convert (adapt) any and all new coal-fired power plants to cogenerate cements. It is estimated that there are several hundreds of new CFPPs planned for worldwide deployment that could thus be converted to cogenerate both electricity and cement. This proposed fleet could generate several billion tons of additional flyash and other CCPs annually when deployed. As part of the design process for new power plants that are to be built, additional space and facilities can be included for the manufacturing of cements in situ, in accordance with these and other concepts of the invention.

In both the existing and new CFPP cases, the resulting cement will be consistent, performant, certified, environmentally sustainable and cost-competitive. These cements will be functional substitutes to conventional Portland cements.

Other goals and advantages of the invention will be further appreciated and understood when considered in conjunction with the following description and accompanying drawings. While the following description may contain specific details describing particular embodiments of the invention, this should not be construed as limitations to the scope of the invention but rather as an exemplification of preferable embodiments. For each aspect of the invention, many variations are possible as known to those of ordinary skill in the art. A variety of changes and modifications can be made within the scope of the invention without departing from the spirit thereof.

### INCORPORATION BY REFERENCE

All publications and patent applications mentioned in this specification are herein incorporated by reference to the same extent as if each individual publication or patent application was specifically and individually indicated to be incorporated by reference.

### BRIEF DESCRIPTION OF THE DRAWINGS

The novel features of the invention are set forth with particularity in the appended claims. A better understanding of the features and advantages of the invention will be obtained by reference to the following detailed description that sets forth illustrative embodiments, in which the principles of the invention are utilized, and the accompanying drawings.

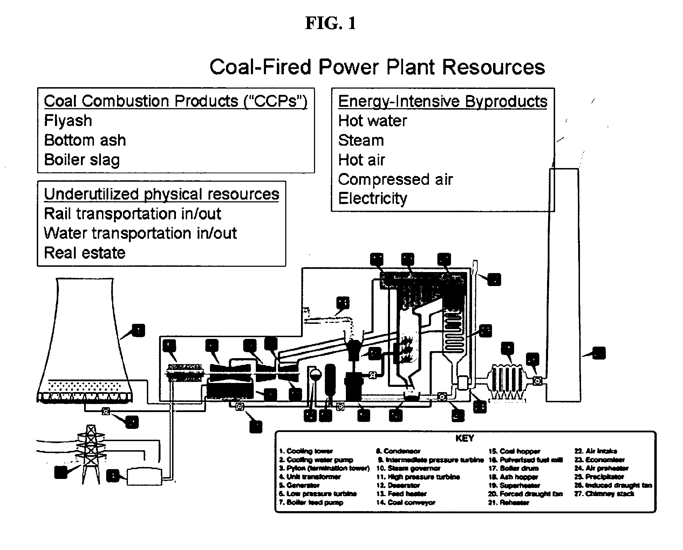

**Figure 1** illustrates a generic CFPP and identifies certain valuable and under-utilized resources including coal combustion products such as flyash, bottom ash and boiler slag; energy-intensive byproducts such as hot water, steam, hot air, compressed air and electricity; and physical resources such as rail transport in/out, water transport in/out and real estate.

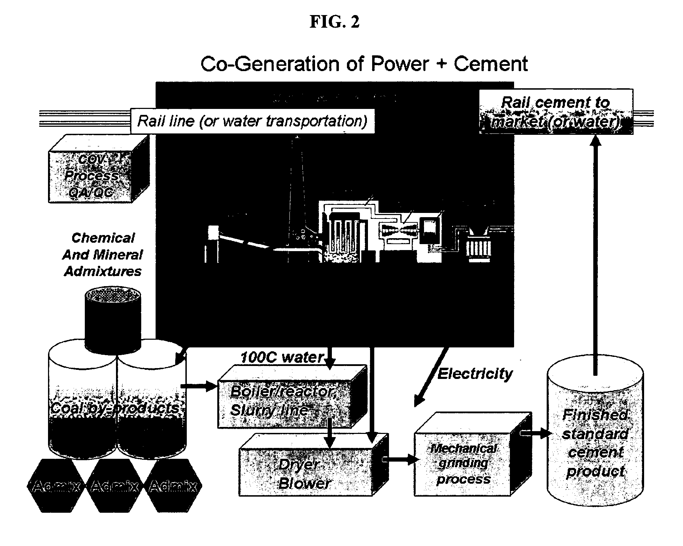

**Figure 2** illustrates a CFPP that is configured for polygeneration of electricity and cement, including all the resources enumerated in Figure 1 and how they connect to the processes and methods of the cement polygeneration system, including boilers, reactors, dryers, blowers, mechanical grinding processes; and a process for characterizing, optimizing and validating the resulting cement.

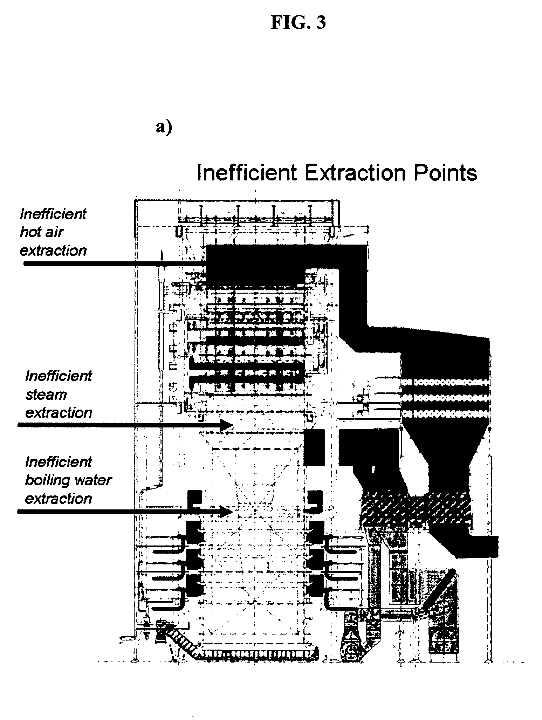

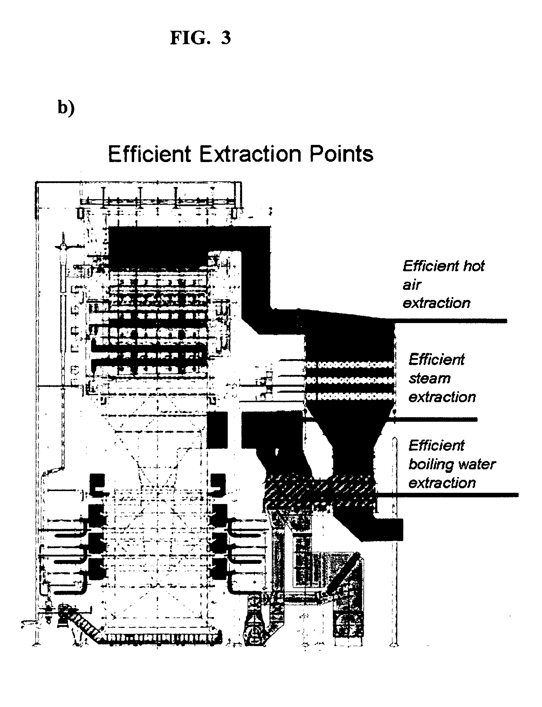

**Figure 3** is a flow chart and block diagram describing various extraction points for removing the energy-intensive byproducts (boiling water, steam, hot air, compressed air and electricity), where (**a**) describes the inefficient points that would burden the CFPP with additional energy production requirements; and (**b**) describes the efficient points that would yield the energy-intensive byproducts with negligible marginal cost, i.e. little to no additional coal bum required.

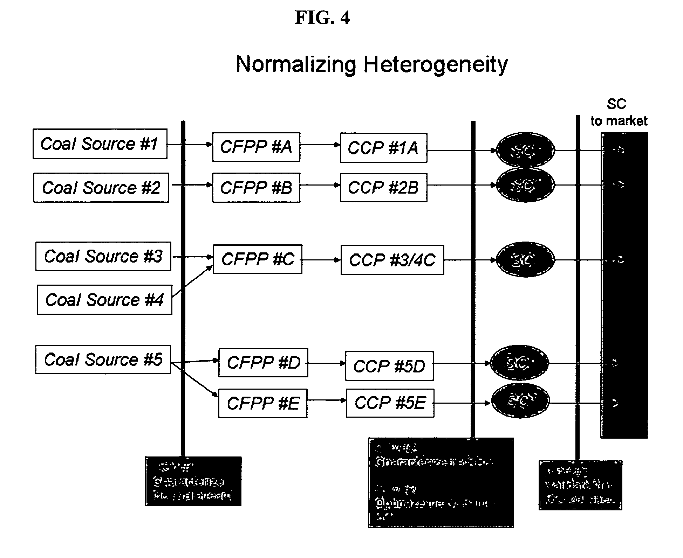

**Figure 4** identifies the heterogeneity issues inherent in this invention, wherein both the sources of coal and the specific characteristics of the CFPP "fingerprint" can significantly affect the performance of the resulting polygenerated cement; describes three inclusive cases that can introduce such heterogeneity; and describes the location of a process to characterize, optimize and validate (COV) the resulting cements such that they can qualify as "standard cements" (SC). Each SC produced can be the same or different, as desired, based on the COV process utilized.

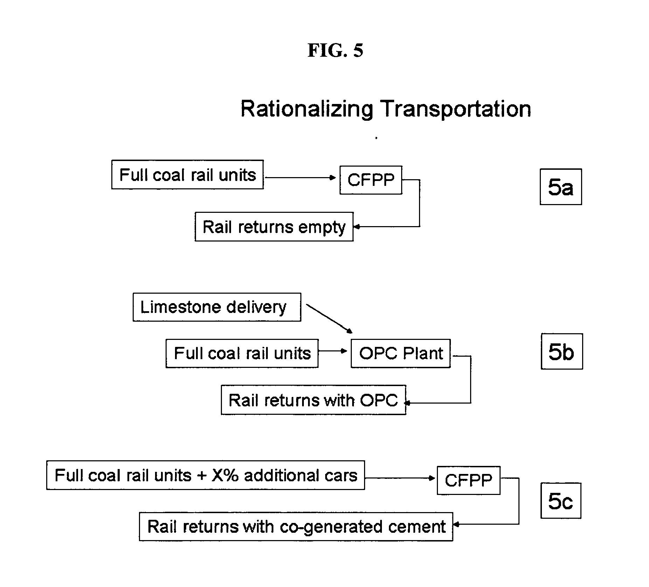

**Figure 5** identifies three inclusive cases where the transportation burden in cogeneration is significantly reduced, where (**a**) describes a typical CFPP rail transport system; (b) describes a typical OPC rail transport system; and (**c**) describes how a cogenerated cement can be provisioned via rail with less than half the transportation cost and burden.

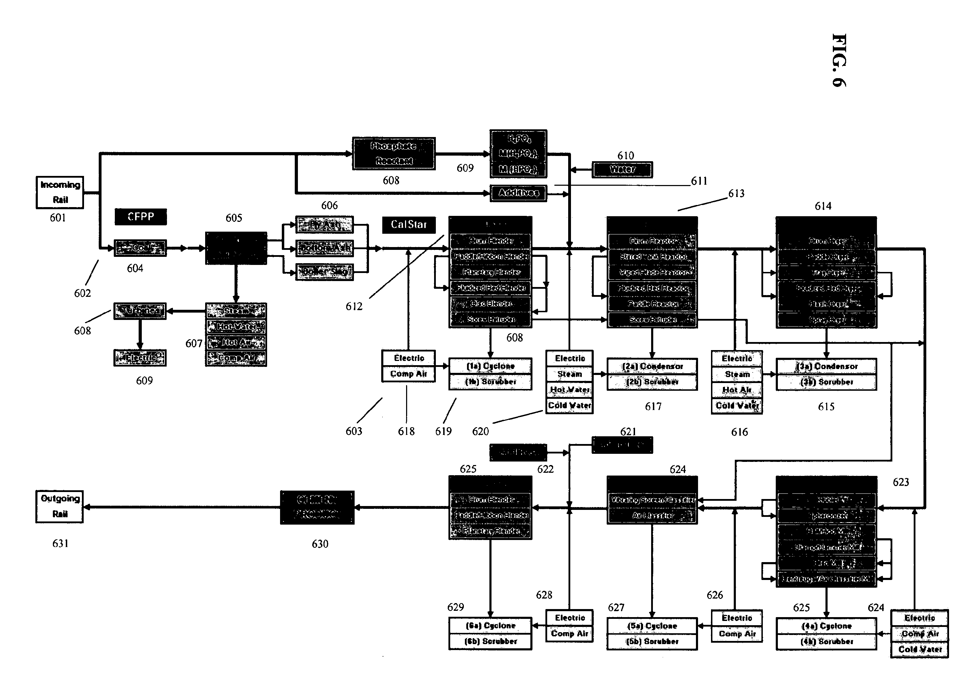

**Figure 6** illustrates various embodiments of the invention for cogeneration of electricity and cement.

### DETAILED DESCRIPTION OF THE INVENTION

The invention provides systems, processes and methods for cogenerating energy and cement. A variety of cements can be produced utilizing the CCPs and other valuable resources and byproducts related to CFPPs. As used throughout this application, the term "polygeneration" includes utilization of byproducts of thermal energy production in the production of cement. Poly-generation includes, but is not limited to cogeneration, such as production of cement by utilizing byproducts produced from thermal energy production (e.g., CFPP electricity production). In addition, poly-generation comprises production of resources (e.g., byproducts) from an industrial process, which in and of themselves are useful in other industrial processes, as described herein. Moreover, poly-generation comprises integration of various resources of, and/or byproducts from, one industrial process (e.g., cogeneration production of thermal energy/electricity) to conduct a second industrial process (e.g., production of cement, concrete, etc.).

Aspects of the invention may provide cogeneration of thermal energy and cement production in a manner that optimizes economic efficiency, the use of natural resources and results in greenhouse gas reduction. In various embodiments of the invention, the cogeneration process involves the production of thermal energy or electricity and cement production from a single coal bum as described herein. In one embodiment, the single coal bum comprises burning coal to produce thermal energy producing electricity, which in turn operates a cement boiler used in the production of cement. Therefore, while thermal energy is utilized to generate electricity from a CFPP, thermal energy and other products and resources used in or emanating from the process can be harnessed for the purposes of cement manufacturing in-situ.

It has been estimated that the energy industry and its CFPPs will consume more than 10 billion tons by 2030. The operation of CFPPs produces CCPs such as fly ash (ASTM Class C, ASTM Class F and uncategorized), bottom ash, boiler slag and scrubber sludge/residue. For example, in 2005, the CFPPs in the U.S. produced 123 million tons of CCPs including 71 metric tons ("MT") fly ash, 18MT bottom ash and about 18MT fluidized-gas desulphurization wet scrubber residue. Approximately 17 MT of fly ash were purchased by the cement industry (directly or via brokers) for inclusion in Portland cement. Some purported "green" or "sustainable" Portland cements typically contain approximately 15-20% w/w of fly ash, although experimental cements have been prepared with up to 90% w/w of fly ash. However, the vast majority of such CCPs end up in landfills.

Accordingly, the compositions, methods and systems provided in accordance with this aspect of the invention can capture the flow of CCPs used in coal-fired power plants for in situ production of cements with relatively higher CCP content. By combining the production of cement with the production of electricity, many economic, performance and environmental benefits are realized. Such benefits include cost savings to the power industry, conservation of natural resources and landfill disposal space and reduced green house gas emissions such as CO₂ emissions. CFPPs can conveniently provide byproducts and share resources with cement manufacturing to provide cogeneration systems and processes in accordance with the invention.

### CFPPs and Related Resources

**FIG. 1** depicts polygeneration utilizing many of the raw material and other resources available at a CFPP. Raw material resources utilized from CFPPs include but are not limited to coal, CCPs such as various classes of fly ash, ash from fluidized bed combustion (FBC), bottom ash, byproducts of flue gas desulfurization (FGD), FGD gypsum or boiler slag. Examples of different classes of fly ash include ASTM Class F, ASTM Class C fly ash and uncategorized fly ash. Pulverized coal and cyclone boilers normally produce fly ash, bottom ash and slag. Furthermore, a substantial quantity of fly ash is entrained in the boiler flue gas and collected in electrostatic precipitators (ESPs) of baghouses operating in CFPPs. Bottom ash is formed when ash particles soften or melt and adhere to the furnace walls and boiler tubes, agglomerating and falling to hoppers located at the base of the furnace. Bottom ash can be transported dry or as slurries to dewatering bins or ponds, where water is removed prior the ash's transfer to utilization-sites or storage stockpiles.

A variety of CCPs and by-products from other industries can be selected for the cements and methods of production provided in accordance with the invention. For example, a blend of one or more CCPs can be selected such as ASTM Class C fly ash, ASTM Class F fly ash, uncategorized fly ash, bottom ash and/or boiler slag, together with one of more kinds of other mineral, industrial, agricultural and/or municipal by-products, and/or low-value minerals. For the purposes of describing various aspects of the invention herein, it shall be understood that the CCPs include coal and its various combustible forms themselves as well as its combustion by-products..

A preferable embodiment of the invention may incorporate a selected class of fly ash such as Class F fly ash for desired CCP cements provided herein. In alternative embodiments of the invention, CCP compositions can be derived from a blend of coal combustion products consisting of Class F fly ash, Class C fly ash, uncategorized fly ash, bottom ash and/or boiler slag, together with one or more kinds of other mineral, industrial, agricultural and/or municipal by-products, and/or low-value minerals, such those described below and elsewhere herein.

In one preferable embodiment of the invention, a heterogeneous CFPP can be modified and converted into a cogeneration plant that produces electricity as well as a consistent, high-performance, sustainable and economic cement as a substitute for Portland cement. At the same time, the CCPs emanating from the operation of the CFPP can be directed or removed from selected extraction points or portions of the plant for cement production. **FIG. 1** also outlines various structures and equipment used in many CFPPs

In various embodiments of the invention, resources that can be utilized in the cogeneration scheme **FIG. 2** of the invention comprise utilization of fly ash, hot water, hot air, compressed air and steam, as well as the power generated from coal fired plants to operate machinery utilized in cement production.

A preferable embodiment of the invention includes production of a variety of cements derived from by-product reactants including some of those listed above to provide acid-base cements, alkali-silicate cements, or some other type of hydraulic cement. The acid-base cements include phosphate cements that may incorporate phosphate reactants. For example, concentrated aqueous phosphoric acid, such as commercial grade 85% H₃PO₄ may be combined to react with CCPs or other by-products herein. Although not preferred for certain embodiments of the invention, more concentrated phosphoric acid can be used such as the following: phosphoric acid reactant containing from 70 to 100% H₃PO₄ by weight, and in other alternate embodiments, containing from about 80 to 90% H₃PO₄ by weight.

Selected phosphate reactants herein may further include other sources of P₂O₅ material. It shall be understood that the term "P₂O₅ material" may describe any material(s) containing phosphorus values. The phosphorus content of these materials is usually analyzed and expressed as P₂O₅, hence use of the term "P₂O₅ material" is illustrative. Such material used in accordance with the invention can be selected from various industrial and agricultural chemicals and wastes. Some examples of suitable P₂O₅ materials include various acidic phosphorus compounds and phosphoric acids, e.g., orthophosphoric acid, pyrophosphoric acids and other polyphosphoric acids and their salts. Other selected P₂O₅ materials can further include aluminum phosphate solution; ammonium phosphate solution; calcium phosphate solution; bright dip phosphoric acid from metal polishing processes; waste phosphoric acid from agricultural chemical processes; steel phosphatizing sludge acid resulting from the pickling of steel to inhibit corrosion; arsenic sulfide sludge acid resulting from the treatment of P₂O₅ waste streams; and any combination of the above liquids. Relatively impure grades of phosphoric acid can be used, such as those produced from low grade phosphate rock, and therefore the low cost of such phosphate reactants can make such cements more commercially attractive.

In one embodiment, the cement is a non-Portland cement that includes a blend of one or more CCPs including various categories (Class F and Class C) of fly ash.

Furthermore, **FIG.2** also illustrates that given the large amount of space/real estate (e.g., "footprint") that cement manufacture requires, another resource is the physical space that a CFPP provides for cement production (e.g., brown-field siting).

**FIG.5** illustrates utilization of transport (in/out) facilities configured for a typical CFPP, another resource is utilization of such transport facilities to intake coal for fuel and transport out the cement produced. In some embodiments, transport in/out of the cogenerating CFPP is by water (barge, boat), rail or truck. In a preferred embodiment, transport in/out is by rail FIG. 2.

In some embodiments, a CFPP's existing transport facility is utilized or a CFPP is configured for consolidated in/out transport utilizing a new transport facility. Such transport/transport facility utilized in cogeneration systems of the invention include, water, rail, truck or any combination thereof.

In one embodiment, CFPP cogeneration of electricity and cement compared to conventional methods of producing cement results in reduction of coal consumption by from about 10, 15, 20, 25, 30, 35, 45, 50, 55, 60, 65, 70, 75, 80, 85, 90, 95 to 99% per ton of cement.

In another embodiment, CFPP cogeneration of electricity and cement compared to conventional methods of producing cement results in reduction of electric energy consumption by from about 10, 15, 20, 25, 30, 35, 45, 50, 55, 60, 65, 70, 75, 80, 85, 90, 95 to 99% per ton of cement.

In another embodiment, CFPP cogeneration of electricity and cement compared to conventional methods of producing cement results in reduction of rail transportation by from about 10, 15, 20, 25, 30, 35, 45, 50, 55, 60, 65, 70, 75, 80, 85, 90, 95 to 99% per ton of cement per.

In some embodiments, a cement produced through cogeneration method of the invention comprises about 5, 10, 15, 20, 25, 30, 35, 40, 45, 50, 55, 60, 65, 70, 75, 80, 85, 90, 95, 96, 97, 98, 99 percent coal combustion products (CCPs). In other embodiments, a cement produced through the cogeneration method of invention comprises from between 2 to 7, 12 to 17, 15 to 23, 22 to 33, 32 to 38, 37 to 44, 36 to 48, 47 to 54, 46 to 58, 57 to 64, 56 to 68, 67 to 74, 73 to 88, 76 to 92, 82 to 95, 88 to 99 percent CCPs. In yet another embodiment, a cement produced through the cogeneration method of the invention comprises from about 50 to 70, 60 to 80, 70 to 90, 80 to 95, 90 to 99 percent CCPs. Furthermore, any mixture of CCPs and/or cement mixtures can be applied in the polygeneration methods of the present invention, including those disclosed in U.S. Provisional Application Serial No. 60/914,021, filed April 25, 2007 (WSGR Docket No. 34400.706.101) and U.S. Application No. 11/758,608 concurrently filed the same day herewith, (WSGR Docket No. 34400.706.201), entitled COAL COMBUSTION PRODUCT CEMENTS AND RELATED METHODS OF PRODUCTION, which are incorporated by reference herein in their entirety.

In some embodiments of the invention, the finished cement product comprises phosphate reactant at from about 1, 2, 3, 4, 5, 6, 8, 9, 10, 11, 12, 13, 14 to 15% by weight. In one embodiment, the phosphate reactant comprises between 5 to 10% by weight of the cement. In some embodiments the phosphate reactant is a phosphoric acid, a dihydrogenphosphate salt (e.g., monopotassium phosphate), a hydrogenphosphate salt, or a combination thereof.

For example, potassium dihydrogenphosphate (0.392 kg), hard-burned magnesium oxide (0.261 kg), Class F fly ash (0.981 kg), sand (2.376 kg) and boric acid (13 g) were blended with water (0.325 kg) in a Hobart mixer for 10 min at room temperature. The resulting mortar paste was cast into 2 inch cubes, and these cured at 50% relative humidity, room temperature for 1 day. The specimens showed compressive strengths of 3,708-4,109 psi.

In another example, a mixture of triple superphosphate (40 g), potassium hydrogenphosphate (30 g), dead-burnt magnesium oxide (40 g), Class F fly ash (100 g) and sand (190 g) were blended with water (60 g) for 5 min at room temperature using a steel spatula. The resulting mortar paste was cast into a 2 inch cube, and this cured at 50% relative humidity, room temperature for 4 days. The specimen showed a compressive strength of 2,324 psi.

In some embodiments of the invention, the finished cement product comprises chemical or mineral additives of from about 1 to 50% by weight. In some embodiments, the finished cement product comprises chemical or mineral additives of about 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49or 50% by weight. Examples of such additives include but are not limited to dihydrogen phosphate salt, hydrogenphosphate salt (e.g., monopotassium phosphate), magnesia, dolomitic lime, lime, limestone, bauxite, alumina, hematite, limonite, magnetite, clay, talc, serpentine, wollastonite, zeolite, volcanic ash, pozzolan, silica and/or silica fume and/or cement admixtures, produces a single-component or blended cementitious products. Additional embodiments for additives useful in the methods and systems of the invention are disclosed in U.S. Provisional Application Serial No. 60/914,021.

In another embodiment, CFPP cogeneration of electricity and cement results in a reduction of green house gases (e.g., CO₂ emissions), as compared to without cogeneration, of about 10,15,20, 25, 30, 35,40,45, 50, 55, 60, 65, 70, 75, 80, 85, 90, 95, 99% over the lifecycle of the plant. For example, instead of CO₂ emissions from a CFPP and separate cement manufacturing plant, utilizing cogeneration there are emissions from a single plant.

In yet another embodiment of the invention, cogeneration reduces transportation time/cost by consolidating incoming coal fuel delivery and finished cement outgoing delivery to and from a single location. Aside from reduced economic costs for transportation, consolidating transportation in/out of CFPPs reduces emissions from trucks, trains or ships utilized to transport coal/cement. In one embodiment, emissions are reduced from trains, trucks, ships or a combination of any thereof, utilized in transport of coal, cement, or CCPs.

Thus in one embodiment of the invention, cogenerating processes, compositions and systems of the invention reduce the amount of coal consumption (e.g., coal combustion), thereby reducing mercury emission by from about 10, 20, 30, 40, 50, 60 to 70% during the lifecycle of a CFPP.

In various embodiments, GHG emissions (e.g., CO₂ are reduced by 1, 2, 3, 4, S, 6, 7, 8, 9, 10, 11, 12, 13, 14, 15, 16, 17, 18, 19, 20, 25, 30, 35, 40, 45, 50, 55, 60, 65, 70, 75, 80, 85, 90, 95, 99 percent over a period of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 50 years, or over the life cycle of a cogenerating CFPP plant.

In another aspect of the invention, reduction of coal consumption (thus coal combustion) provides environmental benefits by reducing toxic emissions associated with coal combustion. Such emissions include particulate or gaseous emissions released into the atmosphere, as well as toxic compounds present in CCPs.

In some embodiments, operation of a cogeneration plant reduces unused CCPs from about 10 to 30, 15 to 40, 20 to 50, 30 to 60, 40 to 70, 50 to 80, 60 to 90, 70 to 99 percent, as compared to without cogeneration. It is known that unused fly ash may contain highly poisonous and/or radioactive chemicals, such as arsenic, uranium, mercury, lead and thorium. (The ash content ranges from about 5% to 15% of coal burned.) These chemicals can leak out from ash settlement ponds into lakes, rivers, streams, oceans and other bodies of water, contaminating fish and other aquatic life forms, and rendering severely ill human beings and animals that drink this water, or ingest the contaminated fish, and their fetuses and breast-feeding children. The long-term accumulation of radioactive materials from the continued worldwide combustion of coal poses additional serious potential health hazards. Mercury, which is highly toxic developmental neurotoxin, is present in all coal, and is released as volatile elemental mercury and organomercury compounds when the coal is burned. The metal subsequently becomes released into the atmosphere along with smoke from the conventional coal-burning combustion process. Accordingly, the invention can also incorporate more fly ash into the cement compositions herein which can therefore reduce unused fly ash and other CCPs.

In further embodiments, the cogenerating aspect of the invention enhances environmental benefits through reduction of emission of environmental pollutants and/or hazardous materials that are produced by conventional coal-burning including: (a) sulfur dioxide, which is an acid gas that is a criteria air pollutant, and the main cause of acid rain, and that causes asthma, permanent damage to the lungs and heart disease; (b) other oxides of sulfur (sulfur oxides), (c) nitrogen dioxide, which is the major component of smog, which causes damage to the lungs and breathing passages; (d) nitrogen monoxide, which is a poisonous gas that has adverse effects upon the environment (depletion of the ozone layer, formation of photochemical smog and the production of acid rain), and which reacts with oxygen to form nitrogen dioxide; (e) other nitrogen (nitrogen oxides); (f) carbon monoxide, a poisonous gas that is often produced as a result of the incomplete combustion of a fuel, and that is a criteria air pollutant; (g) carbon dioxide; (h) methane (CH₄), which is also a greenhouse gas emission that is suspected of causing global warming, and that escapes when coal is burned; (i) hydrochloric acid; (j) dioxin, which is a toxic compound that is a carcinogen and a mutagen; (k) volatile organic compounds (VOCs), which cause smog, serious illnesses, such as asthma,cancer, and harm plants; (I) other metals (zinc, thallium, cadmium, nickel and chromium); (m) radioactive metals other than the isotopes of uranium and thorium, such as the radioactive products produced by the decay of uranium and thorium, including radium, radon, polonium, bismuth and lead; (n) other carcinogenic and/or mutagenic substances; and (O) particulate matter, which is a criteria air pollutant.

### Process for Normalizing Heterogeneous Coal and CFPP Inputs

One aspect of the invention provides a system, process and method for adapting any CFPP and any source of coal for cogenerating consistent, performant cement that provides economic, environmental and performance benefits. The process includes three major steps: Characterization (of the raw, uncombusted coal and of the CCPs); Optimization of the resulting cements; and Validation against recognized industry-standard tests. The short-hand acronym for the Characterization-Optimization-Validation process will be referred to as the "COV Process".

**FIG. 4** illustrates the system, process and method of normalizing the heterogeneity of coal streams, CFPP operations and the resulting CCPs by means of a COV process. The COV Process solves the problem of managing the natural heterogeneity of the input coal stream, noting that each coal mine and possibly different veins of the same coal mine can produce significantly different coal and hence CCPs. Similarly, we note that the "fingerprint" or unique characteristics of the CFPP can produce significantly different CCPs from the same coal source. CFPPs operate at different levels of efficiency that vary the temperature and/or time of a coal bum, thus resulting in variation in CCPs, especially fly ash characteristics. The variations resulting from the different coal streams and the CFPP characteristics can be subtle or gross. However, to produce a consistent cement, the COV Process has to normalize their performance into one consistent standard cement, labeled SC. Figure two posits the existence of five sources of coal (significantly different in their chemical composition) and five types of CFPPs (again, significantly different in their coal burning and CCP handling technologies), thus producing five distinctly different CPPs. **FIG. 4** shows that these five unique sources of coal, CFPPs and CCPs are ultimately normalized into a single, consistent cement, SC.

In **FIG. 4**, Coal Source # 1 streams to CFPP #A, producing CCP #1A that then has to be normalized via COV into a final, consistent Standard Cement (SC-a). Similarly, Coal Source #2 streams to CFPP #B, producing CCP #2B that then has to be normalized via COV into a final, consistent Standard Cement (SC-b).

In **FIG. 4**, Coal Source #3 and #4 both stream into CFPP #C, as a blend, producing CCP #3/4C that then have to be normalized via COV into a final, consistent Standard Cement (SC-c).

In **FIG. 4**, Coal Source #5 streams into CFPP #D and #E, producing CCP #5D and CCP #5E which then have to be normalized via COV into a final, consistent Standard Cement (SC-d).

Furthermore, **FIG. 4** shows as many as four separate COV Process intervention points to characterize, optimize and validate the resulting cement product is a Standard Cement (SC) that can be shipped to market. This function assures quality control.

Thus, the COV aspects of the invention enable SCs produced to be the same or different as desired. In various embodiments a plurality of SCs produced utilizing different COV processes are the same (e.g., **FIG. 4**, e.g., SC-a is the same as SC-b). In other embodiments, a SC produced through one COV process is different as compared to SC produced through a different COV process (e.g., SC-a is different from SC-b), such as where SCs are engineered for different cement applications.

In various embodiments, the cement product can comprise varying compressive strength, permeability and/or pH. For example, the compressive strength as measured in PSI can be from about 1 to 50, 25 to 100, 75 to 300, 150 to 500, 250 to 750, 500 to 2000, 1000 to 5000, 2500 to 7500, 5000 to 10000, 7500 to 15000, 10000 to 20000, 12500 to 25000, 15000 to 30000, 20000 to 35000, 25000 to 40000, 30000 to 450000, 35000 to 50000 PSI. In some embodiments, the cement product compressive strength is measured at about 50, 100, 150, 200, 250, 300, 350, 400, 450, 500, 550, 600, 700, 800, 900, 1000, 1500, 2000, 2500, 3000, 3500, 4000, 4500, 5000, 5500, 6000, 6500, 7000, 7500, 8000, 8500, 9000, 9500, 10000 PSI. Additional embodiments for cement product characteristics are disclosed in U.S. Provisional Application No. 60/914,021.

In various embodiments, the cement products produced are of varying permeability, including impermeable. In some embodiments, the cement product can be substantially permeable, permeable or impermeable.

The COV Process allows accurate characterization of incoming coal, characterization of the resulting coal combustion products (CCPs); and the optimization and validation of outgoing cement product. In COV #1, we characterize the incoming coal stream to establish a quick calibration on the likely CPP output. In COV#2, we characterize the resulting CPP. In COV#3, we optimize the cement by adjusting all the parameters described previously, e.g. temperature and duration of boil; concentration of phosphoric acid in solution; duration of time in solution; mix proportions of phosphated flyash with non-phosphated flyash; additions of certain mineral and/or chemical admixtures; particle size and shape adjustments to the morphology of resulting cement by mechanical means; etc. In COV#4, we validate that the resulting cement meets our specifications as a "standard cement", i.e. shippable to market, by passing a suite of standardized tests that are actual or derived variations of those specified by the American Society of Testing and Materials (ASTM) and the American Concrete Institute (ACI) in the USA and similar tests in other countries.

In some embodiments, characterizing the CCP comprises optical and electronic microscopy used to characterize input materials and output products to ensure that specification targets are met. In some embodiments, the CCPs produced by the CFPP and the outgoing cement are characterized with respect to physicochemical attributes that can be related to desired phosphated CCP and cement product characteristics by processes including but not limited to optical microscopy, SEM, TEM, XRD, XRF, HPLC, IC, titration analysis, calorimetry, FTIR, BET, PSA, and/or NMR.

Another aspect of the COV Process is to optimize the resulting blended cements by adjusting mix ratios of CCPs and selection of chemical and mineral admixtures that correspond to various performance goals. In some embodiments that involve phosphate cements, optimizing the cement quality comprises adjusting percentages of phosphated fly ash to unphosphated fly ash; adjusting the mix of CCPs; adjusting pH of a fly ash mixture (e.g., varying phosphoric acid-water ratios, adding minerals, quick lime or acidic solutions); adjusting the amount of optional admixture materials (including chemical or solid/mineral admixtures such as boric acid as well as chemical or solid/mineral admixtures common to the Portland cement industry,) used in the final blend such as metal dihydrogenphosphate and metal hydrogenphosphate; varying process parameters (e.g., varying time, speed, grinding and final blending operation). Further embodiments can include controlling the reaction conditions based on the type of reactor, its mode of operation, concentration, temperature, pH, type and degree of mixing, feed regimen, residence time, pressure and other variables that affect chemical reactions.

In some embodiments, one or more CCPs is blended with a phosphate (e.g., phosphoric acid, metal dihydrogenphosphate and metal hydrogenphosphate) to produce a "phosphated fly ash" which is processed to produce a cement product (in **FIG. 2**)

In another embodiment, such phosphated fly ash is mixed with untreated fly ash collected from the CFPP.

In yet other embodiments, the phosphated fly ash can be mixed with untreated fly ash, bottom ash, boiler slag or a combination thereof.

In a further embodiment, one or more additive is added to one or more CCPs to produce a CCP composition which can be treated with phosphate compounds (e.g., phosphoric acid), mixed with boiling water and resulting in a slurry (e.g., **FIG. 2**). Boiling water can be diverted from the CFPP. In one embodiment, such admixed or phosphated fly ash slurry is mixed in a boiler/reactor adapted to utilize hot water/steam **FIG. 2** produced in the CFPP.

In yet a further embodiment, admixed or phosphated fly ash slurry is subjected to a dryer/blower **FIG. 2** which can utilize hot air produced by the CFPP.

In yet further embodiments, optimization can include controlling the drying and comminution conditions, based on the type of process, equipment and its mode of operation, drying temperature profile, residence time, moisture content, particle size and shape, and variables that affect chemistry.

In some embodiments, optimization includes controlling additional thermal treatment, grinding and/or comminution operations used for converting phosphated CCP, untreated CCP and/or additives to the final cement product.

In yet a further aspect, the COV Process provides validating the resulting cement to specified QA/QC bracket of acceptance across a variety of standard tests (e.g., workability, set time, tensile strength) to ensure a higher quality product. In one embodiment, the COV Process allows for production of a higher performing cement product.

In one embodiment, a cogenerating CFPP is designed and built. In another embodiment, an existing CFPP is retrofitted or modified so as to operate in the cogeneration methods of the invention.

Therefore, CFPP is retrofitted or modified with the COV Process to configure a CFPP for cogeneration, whereby the process allows characterization of the CCPs, optimizing processing/production (e.g., **FIG. 2**) of a cement product and validating performance levels for such cement.

Another aspect of the COV process is to validate the resulting cements by subjecting the optimized blended cement to a suite of standardized cement and concrete industry tests (e.g., strength over time). Examples of validation tests include those specified by ACI and/or ASTM. However, one of skill will recognize that any validation tests known or developed can be readily configured into the COV process of the invention.

**FIG. 6** provides an overview of some central aspects of the invention and is further described herein. Various aspects of the invention are directed supplying a CFPP **602** plant with materials and processes (**603, 608, 609, 610**) necessary for cogenerating electricity and cement **FIG. 6****.** In various embodiments, resources available at the CFPP are utilized in and integrated with a system to cogenerate cement.

In another aspect, coal is combusted in the CFPP boiler to produce thermal energy to heat water into steam to drive electricity producing turbines. Combustion of coal produces CCPs such as fly ash **606** (dry boiler), bottom ash (dry boiler) and boiler slag (wet boiler), which CCPs are described herein above. Furthermore, aside from steam so produced, hot water, hot air and compressed air are also produced (e.g., **607**).

In a further aspect, CCPs **606** are then mobilized into a blender **612** which can be utilized to mix the CCPs with water **610**, phosphate reactant **608/609**, additives **611** or a combination thereof. Alternatively, CCPs can be mobilized into a blender without addition of any additional compounds. In various embodiments, blenders utilized include but are not limited to a drum, paddle/ribbon, planetary, fluidized bed, disc, screw extruder or a combination thereof. In some embodiments, mobilization and/or blending is facilitated by electricity and/or compressed air provided by the CFPP.

The blended mix is subsequently mobilized into a reactor **613** which includes but is not limited to a drum, stirred tank, wiped blade, fluidized bed, paddle, screw extruder or a combination thereof. In some embodiments the reactor product is mobilized to a dryer and/or comminutor. Dryers **614** useful in the processes of the invention include but are not limited to a drum, paddle, tray, fluidized bed, flash, spray or a combination thereof.

In one embodiment, the reactor product (e.g., product from a screw extruder blender/reactor) is mobilized to a classifier which can be a vibrating screen classifier, air classifier or a combination thereof.

In various embodiments, comminutors **623** include but are not limited to a kibbler, a spheronizer, a ball rod mill, stamp/hammer mill, disc mill, centrifugal/air classifier mill or a combination thereof.

In one embodiment products from a comminutor are mobilized to a classifier to sort/size the product, wherein a classifier **624** includes a vibrating screen classifier, an air classifier or a combination thereof.

In a further embodiment, classified product can be admixed with various raw material or additives and mobilized into a blender **625** (e.g., drum blender, paddle/ribbon blender, planetary blender or a combination thereof).

The blended cement product **630** is then mobilized to the outgoing transport means 631(e.g., rail).

In various aspects of the invention, a cyclone and/or scrubber can be configured to machinery utilized for processing CCPs through the cement production process **FIG. 3**, whereby such a cyclone and/or scrubber (**619, 617, 615, 625, 627, 629**) is operated with electricity, compressed air, steam, hot water, cold water or any combination thereof (**616, 618, 620, 624, 626, 628**), all which are diverted from the CFPP **602**. Furthermore, in various embodiments, equipment, machine or transport means depicted in **FIG. 3** are powered by electricity provided by the CFPP. In addition, such equipment, machine or transport means can utilize compressed air, hot air, steam, cold water, hot water or any combination thereof as necessary, which are also supplied from the CFPP.

### Minimal Disruption of CFPP Operation for Polygeneration

One aspect of the invention is directed to integrating the cement production means with various access points in a CFPP without disrupting CFPP operation or significantly halting CFPP electricity production. As **FIG. 2** depicts, the cogeneration systems of the invention provide transport in of coal (or other material, such as additives), processing of CCPs (with or without doping/conditioning with additives) to produce a cement product that is transported by the same transport means out to market. Various different interfaces are formed to utilize CFPP resources such as electricity, compressed air, steam, hot water, cold water, hot air, but without substantially disrupting CFPP operation.

Another aspect of the invention is to divert boiling water, steam and/or hot air in the most efficient manner, such that it does not add a substantial BTU burden to the CFPP. Many CFPPs have sophisticated heat recapture and regeneration systems. Other CFPPs are more primitive and waste heat. In either case, aspects of the invention minimize, substantially reduce or completely eliminate the need to use more thermal energy to cogenerate both electricity and cement.

**Figure 3** illustrates an example for where extraction points for a CFPP which can be exploited to reduce inefficiencies and enhance more efficient extraction of resources form a CFPP. In (a), inefficient extraction of boiling water, steam and hot air results in a high burden imposed on the CFPP to achieve cogeneration of both electricity and cement. In (b), the extraction of boiling water, steam and hot air are done properly and efficiently. Thus, the calculated burden imposed on the CFPP to achieve cogeneration of both electricity and cement is close to zero BTUs.

In various embodiments of the invention, the calculated burden as a percentage of BTUs is about zero, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 35, 40, 45 or 50%. In some embodiments, the burden is from about zero to 5%, 2 to 10%, 4 to 12%, 7 to 15%, 6 to 20%.

Another aspect of the invention is directed to reduction of labor, time, capital equipment with a minimum or reduced disruption to ongoing operations. Such reduction can be enhanced by integration of processes (e.g., drying, comminution, blending and bagging) at both a unit operation and process train levels with an existing CFPP operations without CFPP service disruption or downgrading CFPP operations.

The cogenerating systems of the invention are integrated with existing CFPP operations so as to preserve material outputs (e.g., electricity production), achieve process telescoping and/or efficient use of CFPP-provided utilities (e.g., electricity, hot water, steam or compressed air).

In one embodiment of the invention, CCPs are automatically extracted from a CFPP and stored in storage silo co-located with the CFPP so as to minimize transport distance and capital expenditure. Therefore, telescoping the tapping and transfer of CCPs from the CFPP to the integrated co-integration processes of the invention with minimal operational requirements or capital.

In another embodiment, appropriate tap-off points for CCPs, boiling water, steam, compressed air or dry air are identified, such resources are integrated into the cogeneration aspect of the invention by utilizing solid, liquid, gas transfer operations, or a combination thereof, which are managed by appropriate process monitoring and control mechanisms. For example, appropriate valves, pumps, control mechanisms, computer SW or QA/QC instrumentation can be retrofitted to an existing CFPP or designed in a new CFPP.

In some embodiments of the invention, a CFPP is retrofitted for cogeneration by modification/retrofitting a CFPP with machinery/equipment which is integrated with the existing CFPP without having to interrupt CFPP operation.

Such machinery/equipment includes but is not limited to a boiler, mixer, slurry, a storage silo or compartment, a reactor/boiler, one or more conveyor belts, a drying element, a pulverizer or a grinder. Of course it should be understand that one or more such machines/equipment can be utilized as necessary to enhance efficiency or increase capacity.

In another embodiment, a pneumatic or "plumbing" system is utilized to transport the resulting finished product to the transport facility. For example, the finished product can be transported directly to barges or ships; bulk rail cars or rail cargo containers; or bulk or container trucks.

Another aspect of the invention is directed to reducing the environmental impact as measured by a lifecycle analysis (LCA) of the CFPP and Portland cement industry through modification of transportation needs. For example, it is common to have 3-5 "rail units" deliver coal every day. A single unit is 100 cars, each carrying 100 tons of coal or 10,000 total. Cogeneration systems of the invention utilize rail both in and out, thus eliminating another source of CO₂ emissions. The same rail system can be utilized to bring in the minimum amount (by weight and volume) of commodities not native at CFPPs, e.g., phosphoric acid for producing phosphated fly ash, metal dihyrdogenphosphate and/or metalhydrogenphosphate or chemical and mineral admixtures. Furthermore, the same rail delivers the cement product to market.

Therefore, in one embodiment the cogenerating process efficiently uses the same rail to deliver finished cement to markets obviating the need for additional modes of transportation or rail resources.

### Economic Benefits

CFPPs around the globe are under pressure to cut or eliminate CO₂ emissions. The systems, compositions and methods described herein allow CFPPs to take or partial credit for offsetting GHG emissions, measured as a ton-for-ton reduction by producing cement through the inventions cogenerating processes versus traditional production of cement in cement manufacturing plants and electricity at CFPPs. In one embodiment, such CO₂ emissions are reduced by cogenerating electricity and cement produced using phosphated fly ash. In another embodiment, such emissions are reduced by cogenerating electricity and cement produced using non-phosphated fly ash.

While preferred embodiments of the invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that methods and structures within the scope of these claims and their equivalents be covered thereby.

## Claims

1. A method for cogenerating electricity and cement comprising combustion of a single coal fuel source and an in-situ blending process.

2. The method of claim 1, wherein said cement comprises coal combustion products from about 10 to 99% per weight.

3. The method of claim 1, wherein said cogenerating results in decreased energy consumption and its concomitant greenhouse gas emissions of about 10 to 99% per annum compared to without said cogenerating.

4. The method of claim 1, wherein said cogenerating results in decreased transportation energy consumption and its concomitant greenhouse gas emissions of about 10 to 99% per annum compared to without said cogenerating.

5. The method of claim 1, wherein said cogenerating reduces overall consumption of coal necessary to produce a unit of both electricity and cement from about 10 to 60%.

6. A system comprising a coal-fired power plant (CFPP) configured to cogenerate cement comprising, a process for characterizing, optimizing and validating ("COV Process") cements made from coal combustion products (CCPs) produced by said CFPP.

7. The system of claim 6, wherein said system comprises a reactor for processing said CCPs to form a cement; and wherein said reactor is configured to receive a liquid or gas from said CFPP.

8. The system of claim 6, wherein said system further comprises a component for pretreating said CCP prior to said processing.

9. The system of claim 6, wherein said system comprises a grinding component to produce a finished cement.

10. The system of claims 7, 8 or 9, wherein said system comprises an efficient delivery means for transporting said finished product and eliminating from 30 to 75% of transportation required for cement production alone.

11. The system of claim 7, wherein said processing comprises conditioning said CCPs with phosphoric acid.

12. The system of claim 6, wherein said cement is a phosphate cement.

13. A method of polygenerating electricity and cement comprising combusting a single coal fuel source.

14. The method of claim 13, wherein said electricity is generated by utilization of thermal energy produced in a coal-fired power plant (CFPP).

15. The method of claim 13, wherein said cement is a phosphate cement.

16. The method of claim 13, wherein said polygenerating comprising generating cement with byproducts generated from said thermal energy produced.

17. The method of claim 13, wherein said cement is generated utilizing resources specific to said CFPP.

18. The method of claim 13, wherein said cement is generated utilizing fly ash produced in said CFPP.

19. The method of claims 13, 14, 15, 16, 17 or 18, wherein said cement is processed in a reactor powered by said CFPP.

20. The method of claim 18, wherein said reactor is adapted to receive a liquid or gas from said CFPP.

21. A method of reducing energy consumption comprising, polygenerating electricity and cement, thereby reducing coal consumption required for cement production.

22. A method of reducing transportation cost of a commodity associated with coal-fired power plants and cement production comprising, polygenerating electricity and cement, wherein said polygenerating reduces transportation fuel costs, thereby reducing transportation costs for said commodity.

23. The method of claims 22, wherein said transportation comprises utilizing rail or truck transport.

24. The method of claims 21 or 22, wherein said cement is a phosphate cement.
